# EUROPEAN PATENT APPLICATION

(11) **EP 3 335 580 A1**
(43) Date of publication of application: **20.06.2018**
(21) Application number: 17174046.7
(22) Date of filing: 01.06.2017
(51) Int. Cl.: A23P 30/20, B33Y 10/00, B33Y 30/00, B33Y 40/00, A23P 20/13, A23P 20/20

(54) **APPARATUS AND METHOD FOR 3D PRINTING OF ARTICLES**

(30) Priority: 16.12.2016 US 201662435488 P
(71) Applicant: Linde Aktiengesellschaft, 80331 München (DE)
(72) Inventor: MOLNAR, Istvan, 6230 Soltvadkert (HU)
(74) Representative: Hofmann, Andreas

(57) **Abstract**

In order to overcome the limitations and problems that earlier apparatus and methods have experienced, a 3D printing head (18) comprising a nozzle (20; 20A; 20B) is proposed, wherein the nozzle (20; 20A; 20B) comprises:
- a material extrusion portion (22A; 22B), and
- at least one protective gas injection portion (24A; 24B) co-acting with said material extrusion portion (22A; 22B).

A related apparatus (10) for 3D printing an article (12), in particular a food article, is also proposed.

A related method of 3D printing an article (12), in particular a food article, is also proposed.

## Description

### Technical field of the present invention

The present invention relates a 3D printing head comprising a nozzle.

The present invention further relates an apparatus for 3D printing an article, in particular a food article.

The present invention further relates to a method of 3D printing an article, in particular a food article.

### Technological background of the present invention

Additive manufacturing methods of three-dimensional (3D) printing may include layer deposition or other techniques to create a 3D article of manufacture. These methods are capable of producing 3D articles from many materials, and may use granular solids or paste-like liquids as a starting material from which the 3D article is manufactured. These 3D printing methods may be used to create 3D printed food products (3D food printing).

However, 3D food printing creates problems which may not be encountered in 3D printing of other articles. For example, 3D food printing results in large amounts of exposed surface area of the printing material during and/or after the printing operation, which may lead to discoloration, oxidation of vitamins or other compounds, and/or microbial growth; the latter being especially detrimental to human safety.

Therefore, apparatus and methods are needed which may at least partially mitigate these problems.

### Disclosure of the present invention: object, solution, advantages

Starting from the disadvantages and shortcomings as described above as well as taking the prior art as discussed into account, an object of the present invention is to overcome the limitations and problems that earlier apparatus and methods have experienced.

This object is accomplished by an apparatus comprising the features of claim 1 as well as by an apparatus comprising the features of claim 4 as well as by a method comprising the features of claim 10. Advantageous embodiments, expedient improvements and other optional features of the present invention are set forth herein and disclosed in the respective dependent claims.

There is provided a 3D printing head comprising a nozzle, wherein the nozzle comprises a material extrusion portion and at least one protective gas injection portion co-acting with said material extrusion portion.

In certain embodiments, the at least one protective gas injection portion may be arranged radially about and spaced apart from the material extrusion portion to provide a delivery space therebetween and through which the protective gas may pass and be delivered.

In certain embodiments, the material extrusion portion may be sized and shaped to deliver the material to be printed through an outlet, in particular the at least one protective gas injection portion being formed with at least one diffuser port spaced apart from the outlet.

Also provided is an apparatus for 3D printing an article, in particular a food article, comprising: a housing defining a chamber; and at least one 3D printing head comprising a nozzle, disposed within the chamber for 3D printing the article within the chamber; wherein the nozzle comprises a material extrusion portion and at least one protective gas injection portion; and wherein the at least one protective gas injection portion is in fluid communication with a source of a protective gas.

Also provided is a method of 3D printing an article, comprising: performing a 3D printing operation using an apparatus comprising a 3D printing head with a nozzle, wherein the nozzle comprises a material extrusion portion, and at least one protective gas injection portion co-acting with said material extrusion portion, said 3D printing operation comprising: extruding a material via the material extrusion portion; and injecting a protective gas via the at least one protective gas injection portion for surrounding the material with substantially only the protective gas.

In certain embodiments of the apparatus and/or of the method, the protective gas may comprise at least one inert gas.

In certain embodiments of the apparatus and/or of the method, the protective gas may comprise at least one of argon, nitrogen, or carbon dioxide. More particularly, the protective gas may comprise from 0% to about 100% argon, from 0% to about 100% nitrogen, and from 0% to about 30% carbon dioxide, by volume based on the total volume of the protective gas; even more specifically, at least about 70% by volume of the protective gas may comprise at least one of argon or nitrogen.

In certain embodiments of the apparatus and/or of the method, the temperature of the protective gas may be from about 2°C to about 25°C.

In certain embodiments of the apparatus and/or of the method, the protective gas may include at least one of: at least one gas, at least one suspended liquid, and/or at least one suspended solid, which may at least partially provide an antimicrobial effect or other beneficial property to the protective gas.

As used herein, the term "substantially" refers to a degree of deviation that is sufficiently small so as to not measurably detract from the identified property or circumstance. The exact degree of deviation allowable may in some cases depend on the specific context.

As used herein, "in fluid communication" means that fluid may be conveyed by direct or indirect connections which allow the fluid to pass from one component to another. Such connections may comprise conduits or other known means by which the components may be connected to deliver a fluid from one component to another.

Three-dimensional (3D) food printing uses materials (a material may include one or more than one ingredient), such as fresh, natural ingredients, processed so that the materials may be extruded through a nozzle to form a 3D printed food product. The nozzle is part of a 3D printing head which is capable of extruding the material through the nozzle.

Via motion of the 3D printing head and/or other components of the 3D printing apparatus, layers of the material are printed or laid down sequentially by the nozzle to form or produce the 3D food product.

In certain embodiments of the apparatus and/or of the method, at least one food-grade binder may be used to provide the desired consistency to the 3D food product.

The 3D printing apparatus may be capable of utilizing one or a plurality of materials to form a single 3D food product.

During the 3D food printing operation, the ingredient(s) being printed may be exposed to surrounding air, in particular the oxygen content of the air. Exposure to air and/or oxygen in 3D food printing may be substantially higher than exposure during conventional food product production.

Alternatively or additionally, exposure to air and/or oxygen in 3D food printing may be more deleterious to the 3D printed food product than to other 3D printed articles. The increased exposure experienced by 3D printed food products may enable oxidation and may cause the products to lose nutritional value, such as degradation of vitamins or other beneficial compounds present within the food products.

In certain embodiments of the apparatus and/or of the method, it may be particularly important to protect the nutritional value of the 3D printed food products, such as for consumer groups having special dietary requirements, for example elderly people or people in extreme locations or conditions (for example submarine personnel or remote scientific research personnel).

The injection of protective gas via the nozzle creates a protective atmosphere around the 3D printing head and the product being printed by applying gas flow, such as continuous gas flow, to the printer head and the substrate upon which the product is being printed.

Thus, the injection of the protective gas substantially displaces air/oxygen from the area surrounding the 3D printing head and the product being printed to at least partially prevent deleterious effects of air/oxygen contacting the 3D food product during and/or after manufacture.

In certain embodiments of the apparatus and/or of the method, injecting the protective gas via the subject nozzle may reduce or eliminate the need to isolate the entire 3D printing apparatus from an external environment, which may result in reduced consumption of the protective gas and lower costs associated with supplying the protective gas.

In certain embodiments of the apparatus and/or of the method, the gas flow may be a low pressure gas flow, such as about 0.5 bar to about 1.5 bar.

In particular, the present apparatus and method embodiments provide a protective atmosphere during the 3D food printing operation, such as by using industrial gases; more particularly, the present apparatus and method embodiments provide and/or use a gas nozzle for food preparation including 3D food printing.

While the subject technology embodiments may be described herein with regard to 3D food printing in particular, it is contemplated that the subject technology may be used in 3D printing any article which may encounter problems similar to those encountered in 3D food printing, as described herein. The subject technology embodiments may be used with other than 3D printing or 3D food printing. Examples include but are not limited to medicines, pharmaceuticals, preservative, etc.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 4 as well as on claim 10; further improvements, features and advantages of the present invention are explained below in more detail with reference to a particular and preferred embodiment by way of nonlimiting example and to the appended drawing figures taken in conjunction with the following description of exemplary embodiment, of which:
- FIG. 1: shows a schematic view of an illustrative embodiment of an apparatus according to the present invention, said embodiment working according to the method of the present invention;
- FIG. 2: shows a cross-sectional view of an illustrative embodiment of a nozzle for 3D food printing according to the present invention and for use in for example the apparatus of FIG. 1; and
- FIG. 3: shows a cross-sectional view of another illustrative embodiment of a nozzle for 3D food printing according to the present invention and for use in for example the apparatus of FIG. 1.

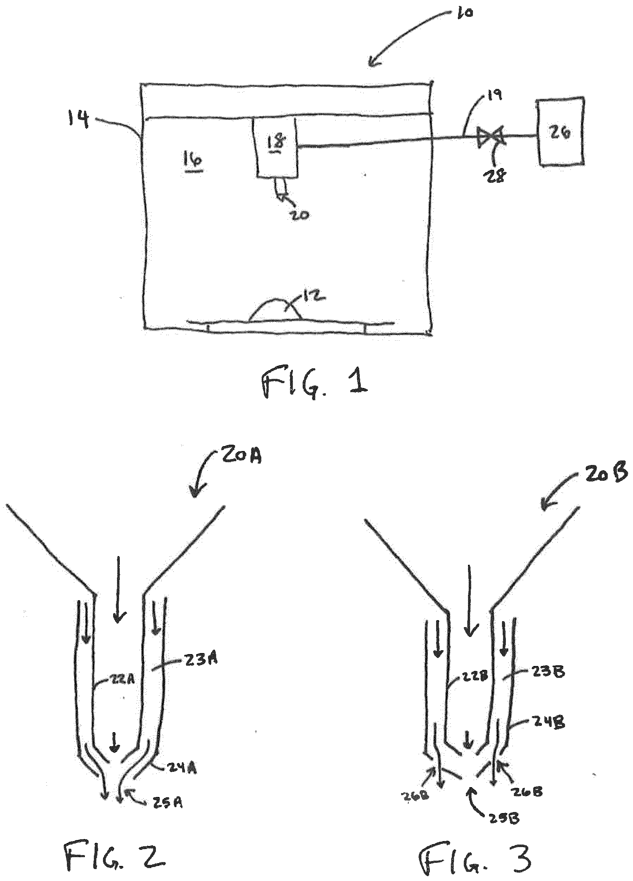

The accompanying drawings are included to provide a further understanding of the apparatus and method(s) provided herein and are incorporated in and constitute a part of this specification. The drawings illustrate an embodiment of the apparatus and method(s) provided herein and, together with the description, serve to explain the principles described herein but are not intended to limit the specification or any of the claims. In the accompanying drawings, like equipment is labelled with the same reference numerals throughout the description of FIG. 1 to FIG. 3.

### Detailed description of the drawings;

### best way of embodying the present invention

Before explaining the present inventive embodiment in detail, it is to be understood that the embodiment is not limited in its application to the details of construction and arrangement of parts illustrated in the accompanying drawing, since the present invention is capable of other embodiments and of being practiced or carried out in various ways. Also, it is to be understood that the phraseology or terminology employed herein is for the purpose of description and not of limitation.

In the following description, terms such a horizontal, upright, vertical, above, below, beneath and the like, are used solely for the purpose of clarity illustrating the present invention and should not be taken as words of limitation. The drawings are for the purpose of illustrating the present invention and are not intended to be to scale.

In particular and referring to FIG. 1, there is shown an illustrative apparatus 10 for 3D printing an article 12, including but not limited to a food article, comprising a housing 14 defining a chamber 16 within the housing 14.

At least one 3D printing head 18, including a nozzle 20, is disposed within the chamber 16, operable for printing the article 12. The printing head 18 is movable within the chamber 16 to produce the article 12. The nozzle 20 (depicted in more detail in FIG. 2 and in FIG. 3) is in fluid communication through a flow path or pipe 19 with a source 26 of a protective gas, optionally wherein a valve 28 (or other flow control device) is disposed within the flow path or pipe 19 to control a flow of the protective gas from the source 26 to the nozzle 20.

In particular and referring to FIG. 2, there is shown an illustrative nozzle 20A comprising a material extrusion portion 22A and at least one protective gas injection portion 24A arranged radially about and spaced apart from the portion 22A to provide a delivery space 23A therebetween and through which the protective gas may pass and be delivered.

The material extrusion portion 22A is sized and shaped to deliver the material to be printed through an outlet 25A. The at least one protective gas injection portion 24A is in fluid communication with the source of protective gas 26 via the 3D printing head 18, as shown in FIG. 1.

The nozzle 20A depicted in FIG. 2 may be suitable for use with printing materials which are substantially solid and/or which are not very pressure sensitive, as the protective gas is injected adjacent to and onto the material extrusion to protect same from any atmosphere in the chamber 16 detrimental to the article 12.

The nozzle 20A depicted in FIG. 2 may also provide a more directed stream of protective gas which may not disperse very far from the printing head 18 and/or from the article 12 to be printed from the material.

In particular and referring to FIG. 3, there is shown another illustrative nozzle 20B comprising a material extrusion portion 22B and at least one protective gas injection portion 24B arranged radially about and spaced apart from the portion 22B to provide a delivery space 23B therebetween and through which the protective gas may pass and be delivered.

The material extrusion portion 22B is sized and shaped to deliver the material to be printed through an outlet 25B. The at least one protective gas injection portion 24B is in fluid communication with the source of protective gas 26 via the 3D printing head 18, as shown in FIG. 1.

The gas injection portion 24B is formed with at least one diffuser port 26B or hole spaced apart from the outlet 25B. The diffuser port 26B releases the protective gas before same impacts the material being extruded from the material extrusion portion 22B to correspondingly reduce the pressure and force of the gas impacting the material to be printed.

The nozzle 20B depicted in FIG. 3 may be suitable for use with printing materials which are somewhat less solid and therefore more delicate, and/or which are somewhat pressure sensitive.

The nozzle 20B depicted in FIG. 3 may also provide a less directed stream of protective gas which may disperse further from the printing head 18 and/or from the article 12, but still provide the necessary protection against oxidation of the material or printed article 12.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

**List of reference signs**

| | | |
|---|---|---|
| 10 | apparatus | |
| 12 | article, in particular food article | |
| 14 | housing | |
| 16 | chamber | |
| 18 | 3D printing head | |
| 19 | flow path or pipe from source of protective gas 26 to 3D printing head 18 | |
| 20 | nozzle | |
| 20A | nozzle | (first embodiment; cf. FIG. 2) |
| 20B | nozzle | (second embodiment; cf. FIG. 3) |
| 22A | material extrusion portion | (first embodiment; cf. FIG. 2) |
| 22B | material extrusion portion | (second embodiment; cf. FIG. 3) |
| 23A | delivery space | (first embodiment; cf. FIG. 2) |
| 23B | delivery space | (second embodiment; cf. FIG. 3) |
| 24A | protective gas injection portion | (first embodiment; cf. FIG. 2) |
| 24B | protective gas injection portion | (second embodiment; cf. FIG. 3) |
| 25A | outlet | (first embodiment; cf. FIG. 2) |
| 25B | outlet | (second embodiment; cf. FIG. 3) |
| 26 | source of protective gas | |
| 26B | diffuser port or hole | (second embodiment; cf. FIG. 3) |
| 28 | flow control device, in particular valve, in flow path or pipe 19 | |

## Claims

1. A 3D printing head (18) comprising a nozzle (20; 20A; 20B), wherein the nozzle (20; 20A; 20B) comprises:
- a material extrusion portion (22A; 22B), and
- at least one protective gas injection portion (24A; 24B) co-acting with said material extrusion portion (22A; 22B).

2. The 3D printing head according to claim 1, wherein the at least one protective gas injection portion (24A; 24B) is arranged radially about and spaced apart from the material extrusion portion (22A; 22B) to provide a delivery space (23A; 23B) therebetween and through which the protective gas may pass and be delivered.

3. The 3D printing head according to claim 1 or 2, wherein the material extrusion portion (22A; 22B) is sized and shaped to deliver the material to be printed through an outlet (25A; 25B), in particular the at least one protective gas injection portion (24B) being formed with at least one diffuser port (26B) spaced apart from the outlet (25B).

4. An apparatus (10) for 3D printing an article (12), in particular a food article, comprising:
- a housing (14) defining a chamber (16); and
- at least one 3D printing head (18) comprising a nozzle (20; 20A; 20B) according to at least one of claims 1 to 4, said at least one 3D printing head (18) disposed within the chamber (16) for 3D printing the article (12) within the chamber (16),
wherein the at least one protective gas injection portion (24A; 24B) is in fluid communication with a source (26) of a protective gas.

5. The apparatus according to claim 4, wherein the protective gas comprises at least one inert gas.

6. The apparatus according to claim 4 or 5, wherein the protective gas comprises at least one of argon, nitrogen, or carbon dioxide.

7. The apparatus according to claim 6, wherein the protective gas comprises from 0% to about 100% argon, from 0% to about 100% nitrogen, and from 0% to about 30% carbon dioxide, by volume based on the total volume of the protective gas, in particular at least about 70% by volume of the protective gas comprising at least one of argon or nitrogen.

8. The apparatus according to at least one of claims 4 to 7, wherein the temperature of the protective gas is from about 2°C to about 25°C.

9. The apparatus according to at least one of claims 4 to 8, wherein the protective gas comprises at least one suspended liquid and/or at least one suspended solid.

10. A method of 3D printing an article (12), in particular a food article, comprising performing a 3D printing operation for producing the article (12) using an apparatus (10) comprising a 3D printing head (18) with a nozzle (20; 20A; 20B) according to at least one of claims 1 to 4, said 3D printing operation comprising:
- extruding a material via the material extrusion portion (22A; 22B); and
- injecting the protective gas via the at least one protective gas injection portion (24A; 24B) for surrounding the material with substantially only the protective gas for protecting said article (12).

11. The method according to claim 10, wherein the protective gas comprises at least one inert gas.

12. The method according to claim 10 or 11, wherein the protective gas comprises at least one of argon, nitrogen, or carbon dioxide.

13. The method according to claim 12, wherein the protective gas comprises from 0% to about 100% argon, from 0% to about 100% nitrogen, and from 0% to about 30% carbon dioxide, by volume based on the total volume of the protective gas, in particular at least about 70% by volume of the protective gas comprising at least one of argon or nitrogen.

14. The method according to at least one of claims 10 to 13, wherein the temperature of the protective gas is from about 2°C to about 25°C.

15. The method according to at least one of claims 10 to 14, wherein the protective gas comprises at least one suspended liquid and/or at least one suspended solid.
